(19) Europäisches Patentamt

European Patent Office

Office européen des brevets

(11) **EP 4 674 553 A1**

(12) **EUROPEAN PATENT APPLICATION**

(43) Date of publication:
07.01.2026 Bulletin 2026/02

(21) Application number: 25186061.5

(22) Date of filing: 27.06.2025

(51) International Patent Classification (IPC):
**B23K 9/095** (2006.01)  **B23K 9/10** (2006.01)
**G01R 19/00** (2006.01)  **H02M 1/00** (2006.01)

(52) Cooperative Patent Classification (CPC):
**B23K 9/1043; B23K 9/095; B23K 9/0953;**
**B23K 9/1062; G01R 19/00; H02M 1/0003;**
H02M 1/007

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 03.07.2024 US 202418763106

(71) Applicant: The ESAB Group, Inc.
North Bethesda MD 20852 (US)

(72) Inventors:
• **Juliusson, Lars**
**Västra Frölunda (SE)**
• **Andersson, Philip**
**Floda (SE)**
• **Landin, Björn**
**Mölndal (SE)**
• **Paussen, Armand**
**Partille (SE)**

(74) Representative: **Murgitroyd & Company**
**165-169 Scotland Street**
**Glasgow G5 8PL (GB)**

(54) **HIGH-VOLTAGE ISOLATING DIGITIZER FOR WELDING SYSTEM**

(57)     An apparatus in a welding or cutting system comprises: an analog comparator (222) to perform comparing a level of a voltage that is generated by a welding power supply of the welding or cutting system against an amplitude of an analog triangle waveform (230), to produce a binary waveform (232) that has a first comparison level when the amplitude exceeds the level and a second comparison level when the amplitude does not exceed the level; and a digital controller (104) configured to perform: measuring a first interval and a second interval over which the first comparison level and the second comparison level extend, respectively; computing an interval ratio based on the first interval and the second interval; and converting the interval ratio to a digitized value representative of the level of the voltage.

FIG.2

EP 4 674 553 A1

**Description**

**TECHNICAL FIELD**

The present disclosure relates to digitizing a high-level voltage in a welding system.

**BACKGROUND**

A welding power supply typically includes a power inverter, a transformer, and a rectifier that collectively operate as a weld process regulator to generate high-level power supply voltages from externally supplied input power, and to convert the high-level power supply voltages to weld power for a welding process. A controller powered by a low-level voltage controls the power inverter to drive the weld power to a desired level based on feedback measurements of the weld power. It is desirable that the controller monitor the input power and/or the high-level power supply voltages for control of the weld power; however, the controller does not have the capability to handle such high-level voltages. For example, directly connecting the high-level voltages to the controller may damage the low-voltage components of the controller, and may also be restricted or prevented by safety regulations and standards.

**BRIEF DESCRIPTION OF THE DRAWINGS**

FIG. 1 is an illustration of an example metal inert gas (MIG)/metal active gas (MAG) welding system, in which embodiments directed to a high-voltage isolating digitizer (HVID) may be implemented.
FIG. 2 is a block diagram of an example power supply, the HVID, and a power supply controller (PSC) of the welding system, according to an embodiment.
FIG. 3 shows example waveforms of the HVID useful for describing operations performed by the HVDI to convert a constant DC bus voltage to a digitized value using a triangle waveform with uniform cycle periods.
FIG. 4 shows example waveforms of the HVID useful for describing operations performed by the HVDI to convert the constant DC bus voltage to a digitized value using a triangle waveform with different cycle periods.
FIG. 5A shows example waveforms of the HVID useful for describing operations performed by the HVDI to convert a rising DC bus voltage to digitized values using the triangle waveform with different cycle periods.
FIG. 5B shows an example triangle waveform used to calibrate the HVID.
FIG. 6 is a flowchart of a method of converting a high-level voltage to a digitized value performed by the HVID.
FIG. 7 is a block diagram of the PSC according to an embodiment.

**DETAILED DESCRIPTION**

Overview

In an embodiment, an apparatus in a welding or cutting system comprises: an analog comparator to perform comparing a level of a voltage that is generated by a welding power supply of the welding or cutting system against an amplitude of an analog triangle waveform, to produce a binary waveform that has a first comparison level when the amplitude exceeds the level and a second comparison level when the amplitude does not exceed the level; and a digital controller configured to perform: measuring a first interval and a second interval over which the first comparison level and the second comparison level extend, respectively; computing an interval ratio based on the first interval and the second interval; and converting the interval ratio to a digitized value representative of the level of the voltage.

Example Embodiments

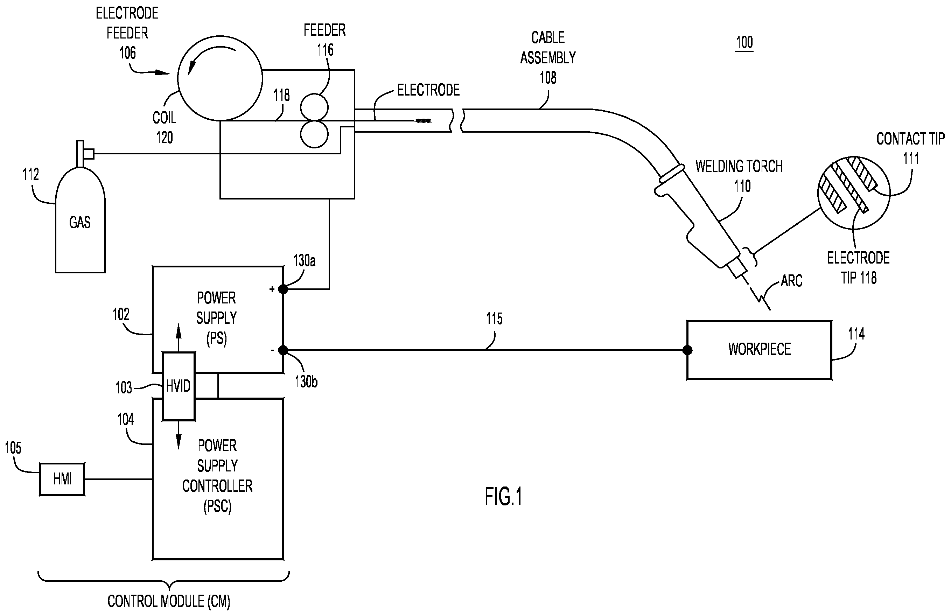

With reference to FIG. 1, there is an illustration of an example metal inert gas (MIG)/metal active gas (MAG) welding system 100 that employs embodiments directed to a high-voltage isolating digitizer (HVID) to sample or measure a high-level voltage of a welding power supply. The embodiments are presented in the context of MIG/MAG welding by way of example only. It is understood that the embodiments may be employed generally in any known or hereafter developed welding environments, such as, but not limited to, tungsten inert gas (TIG) welding, flux cored arc welding (FCAW), shielded metal arc welding (SMAW) or stick welding, submerged arc welding (SAW), and so on. Additionally, the embodiments may be employed equally in an arc cutting apparatus.
In the example shown in FIG. 1, welding system 100 includes: a power supply 102; an HVID 103 implemented according to embodiments presented herein, a power supply controller (PSC) 104 coupled to and configured to control the power supply; a human machine interface (HMI) 105 coupled to the PSC and through which a human interacts with and controls the welding system; a wire electrode feeder 106 coupled to the power supply; a cable assembly 108 coupled to the wire electrode feeder 106; a torch 110 coupled to the cable assembly 108 and having a sturdy metal contact tip 111 that extends from an end of the torch 110; a gas container 112 coupled to the cable assembly 108; and a workpiece 114 coupled to the power supply through at least a return path/cable 115. PSC 104 and HMI 105 collectively form a control module CM. In the ensuing description, the terms "weld" and "welding" are synonymous and interchangeable. In the context of arc welding, torch 110 may be referred to as a "welding torch" or "welding gun."

Wire electrode feeder 106 includes a feeder 116 to feed a consumable electrode from a coiled wire electrode 120 through cable assembly 108 and through contact tip 111 of torch 110, which is in electrical contact with the electrode. Under control of PSC 104, power supply 102 generates weld power that drives the welding process/operation. In welding operations that involve a pulsed or periodic waveform, the weld power typically includes a series of weld current pulses. Power supply 102 provides the weld power from an output terminal 130a of the power supply to the wire electrode, through feeder 116, cable assembly 108, and torch 110, while the cable assembly 108 also delivers a shielding gas from gas container 112 to the torch. Return path/cable 115 provides an electrical return path from workpiece 114 to an input terminal 130b of power supply 102. The aforementioned components comprise a circuit path or weld circuit from output terminal 130a to input terminal 130b of power supply 102, through wire electrode feeder 106, cable assembly 108, torch 110, workpiece 114, and return path/cable 115.

During a welding operation, an electrode tip 118 of the electrode is brought into contact or near contact with workpiece 114, and the weld power (i.e., current and voltage) supplied by power supply 102 to the torch 110 creates an arc between workpiece 114 and electrode tip 118 extending through the contact tip. To control the welding process, PSC 104 controls power supply 102 to generate the weld power (e.g., current) at a desired level for the welding process, based on feedback in the form of measurements of the current and voltage (e.g., arc voltage) supplied by the power supply to the welding process. The measurements may be produced by current and voltage sense points in power supply 102 and/or at sense points that are remote from the power supply, such as in cable assembly 108 or torch 110.

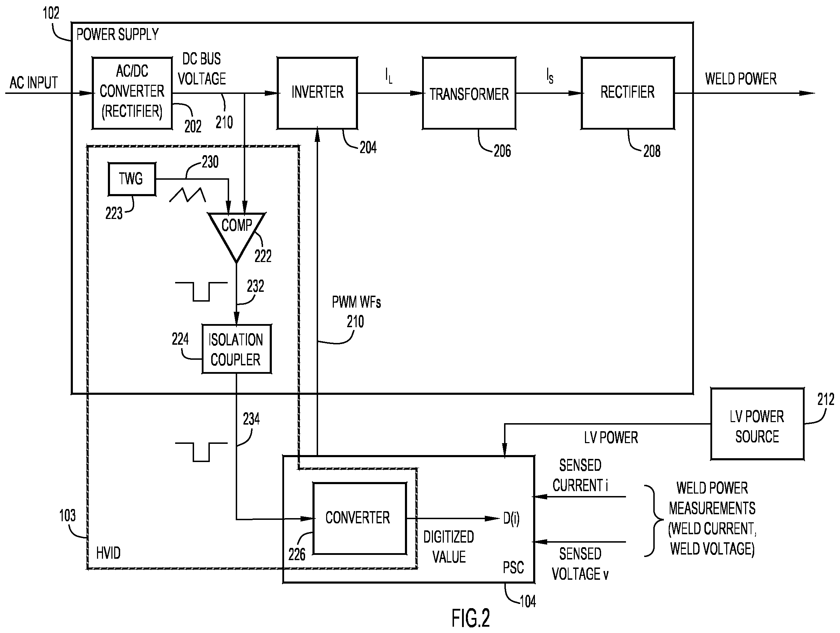

According to the embodiments presented herein, HVID 103 digitizes a high-level voltage (also referred to as a "high voltage") input to power supply 102, or generated by power supply 102 for the welding process, into digitized (i.e., digital) values representative of the high voltage, and provides the same to PSC 104. In response, PSC 104 performs control (e.g., feedforward control) of the weld power/welding process based on the digitized values. In addition, HVID 103 electrically isolates PSC 104 from the high voltage to protect the PSC from damage, and to comply with safety regulations and standards. HVID 103 is described further below in connection with FIGs. 2-6.

FIG. 2 is an example block diagram of power supply 102, PSC 104, and HVID 103, according to an embodiment. In the example of FIG. 2, HVID 103 includes components in both power supply 102 and PSC 104, although the HVID components may comprise an assembly that is external to, but connected to, both the power supply and the PSC. Power supply 102 includes an alternating current (AC)/DC (AC/DC) converter 202 to receive AC input power (e.g., from AC mains or a generator), a power inverter (referred to simply as an "inverter") 204, a highfrequency transformer 206, and a rectifier 208 coupled to one another. AC/DC converter 202 includes, for example, a diode rectifier to convert the AC input power to a rectified DC voltage (referred to as the DC bus voltage), and provides the DC bus voltage to an input of inverter 204. The DC bus voltage can be relatively high voltage, such as 400V and above, for example, although other voltages are possible. In addition, while rectified, the DC bus voltage may vary over a relatively wide range. Thus, the DC bus voltage may be considered a variable voltage. Under control of PSC 104, inverter 204, transformer 206, and rectifier 208 collectively operate as a weld process regulator (also referred to as a power supply "output circuit") to convert the DC bus voltage to a desired weld power supplied by power supply 102 for a welding operation.

Inverter 204 comprises a set of high-speed semiconductor switching devices (i.e., power switches) that are pulse width modulated (i.e., switched on and off at a switching frequency) responsive to pulse width modulation (PWM) waveforms 210 (also referred to as "PWM signals"), generated by PSC 104 and applied to control terminals of the switching devices, to convert the DC bus voltage to an AC (power) signal or waveform including a voltage and a primary current $I_L$ that flows into transformer 206. Such operation is referred to as "PWM operation" of inverter 204. Inverter 204 may include a four-quadrant inverter, such as an H-bridge inverter, for example. In other examples, other types of inverters may be employed. Example switching frequencies may be in a range from 1 kHz-100 kHz, although other switching frequencies above and below this range may be used. Inverter 204 supplies the AC signal to transformer 206. Transformer 206 converts the voltage and current of the AC signal from inverter 204 to a transformed AC signal having desired levels of a voltage and a secondary current $I_S$ for the welding operation, and supplies the transformed AC signal to rectifier 208. The transformed AC signal can be considered to be indicative of, or to form the basis of, the weld power. Rectifier 208 rectifies the transformed AC signal to produce the weld power and supplies the same to the welding process.

The AC input power (including one or more three-phase AC voltages), the DC bus voltage, the AC waveform, and the transformed AC signal are examples of high-level AC or DC power voltages (or simply "high voltages") of/associated with power supply 102. The high voltages are either applied to or generated by power supply 102 to produce the weld power. The high voltages may be variable.

PSC 104 may be implemented as a low-voltage digital controller that is powered by/operates off of a low voltage (e.g., 1V-10V) that is less in magnitude than the DC bus voltage, for example. To this end, welding system 100 may include a low-voltage power source 212 that generates the low voltage, and supplies the same to PSC 104 to power the PSC. HVID 103 is coupled to power supply 102 and PSC 104. In the example of FIG. 2, HVID 103 receives the DC bus voltage. HVID 103 converts the level of the DC bus voltage over the range across which the level is expected to vary into a digitized value (or values) D that represent the DC bus voltage, and provides the digitized values to PSC 104. HVID 103 is described below in the context of digitizing the DC bus voltage by way of example, only. In other examples, HVID 103 may receive the AC input power, the AC waveform, or the transformed AC signal, and digitize that high voltage. More generally, HVID 103 may digitize any high-level AC or DC voltage. The level of the high-level AC or DC voltage applied to HVID 103 for digitization may range from -1000V to +1000V, for example, although other voltage levels are possible.

Welding system 100 includes a current sense point to provide a sensed or measured current $i$ to PSC 104. Current $i$ is indicative of the weld current (and the weld power) supplied to weld torch 110 during a weld operation and when welding system 100 is idle and not actively engaged in the welding operation. Welding system 100 includes a voltage sense point to provide a sensed or measured voltage $v$ to PSC 104. Voltage $v$ is indicative of the weld voltage (and the weld power) supplied to weld torch 110 during a weld operation and when power supply is welding system 100 is idle and not actively engaged in the welding operation. The current and voltage sense points may be located in or near the sequential stages of power supply 102, or may be implemented remotely from the power supply. Together, current $i$ and voltage $v$ represent measurements of weld power supplied by power supply 102 to torch 110 for a welding process. That is, together, current $i$ and voltage $v$ represent weld power measurements. To control the weld power generated by power supply 102, PSC 104 generates and controls (e.g., dynamically adjusts) PWM waveforms 210 applied to inverter 204 based at least in part on the weld power measurements and the DC bus voltage, as represented by the digitized values D. For example, PSC 104 may increase duty cycles and thus on-times of PWM waveforms 210 applied to inverter 204 to increase the weld power, and vice versa. In this way, power supply 102 and PSC 104 implement (i) a feedback control loop to control PWM waveforms 210 based on current $i$ and voltage $v$, and (ii) a feedforward loop to control the PWM waveforms based on digitized values D.

HVID 103 is now described in detail in the example context of digitizing the DC bus voltage. HVID 103 includes an analog comparator 222, an analog triangle waveform generator (TWG) 223, an isolation coupler 224 (also referred to as an "electrical isolator"), and a converter 226 (also referred to as a "digital converter") coupled to each other as shown. In the example arrangement of FIG. 2, analog comparator 222, TWG 223, and isolation coupler 224 may be implemented in power supply 102 and are thus exposed to high voltages generated by the power supply. On the other hand, converter 226 is implemented in low-voltage digital circuitry of PSC 104. In another arrangement, the HVID components may be external to, but coupled to, power supply 102 and PSC 104. Other HVID component partitioning arrangements are possible.

TWG 223 generates an analog triangle waveform (TWF) 230 having a known shape and that repeats on a cyclic or periodic basis. Each cycle of TWF 230 has a known period, a known maximum amplitude, and rising and falling edges or sides with known rising and falling slopes, respectively. The full amplitude of TWF 230 preferably corresponds to a range over which the level of the DC bus voltage can or is expected to vary. That is, TWF 230 and the DC bus voltage preferably have matching dynamic ranges. TWF 230 may be any type of triangle waveform including a sawtooth waveform. The rising and falling edges of each cycle of TWF 230 may have different slopes, and the periods of successive cycles of the TWF may be different, as described below. While the rising and falling slopes may both be linear, non-linear slopes are also possible.

Analog comparator 222 includes a first input to receive the (analog) DC bus voltage and a second input to receive TWF 230. Analog comparator 222 repetitively/continuously compares the level of the DC bus voltage against the rising and falling amplitude of TWF 230 over time across each cycle of the TWF, to produce at an output of the comparator a continuous comparison result in the form of a binary waveform (BWF) 232. During each period or cycle of TWF 230, binary waveform 232 toggles between the following two levels:

    a. First comparison level L1 (e.g., 0) for a first time period or time interval T1 while the amplitude of TWF 230 exceeds the level of the DC bus voltage. First comparison level L1 extends over the time interval T1.
    b. Second comparison level L2 (e.g., 1) for a second time interval T2 while the amplitude of TWF 230 does not exceed the level of the DC bus voltage. Second comparison level L2 extends over the time interval T2.

The above-listed senses of levels L1 and L2 may be reversed.

Isolation coupler 224 is coupled to and between the output of analog comparator 222 and PSC 104 (and converter 226), and serves to electrically isolate the DC bus voltage in power supply 102 from PSC 104. In addition, isolation coupler 224 converts binary waveform 232 to an isolated binary waveform 234 that is electrically isolated from analog comparator 222 and the DC bus voltage, and provides the isolated binary waveform to converter 226 of PSC 104. Isolated binary waveform 234 represents an electrically isolated copy (or copied version) of binary waveform 232, and thus conveys the same level and timing information as the binary waveform. Examples of isolation coupler 224 include an optical isolator, a capacitive isolator, a transformer, and the like, although other possibilities exist.

Converter 226 includes digital logic that performs digital processing on the level and timing information conveyed by isolated binary waveform 234 (which is the same as in binary waveform 232). Converter 226 converts or translates the level and timing information of isolated binary waveform 234 to digitized value D, as follows. For each cycle of TWF 230, e.g., an i'th cycle of the TWF, converter 226 measures time intervals T1 and T2 of isolated binary waveform 234. For example, the time intervals may be measured as integer counts of a clock signal (i.e., cycle counts of the clock signal), although other digital techniques may be employed to measure the time intervals. In the ensuing description, the term "interval" is synonymous with and replaces the term "time interval." Next, converter 226 computes an interval ratio R = T1/(T1+ T2) (or T2/(T1 + T2)). Then, converter 226 converts the interval ratio R to digitized value D. Digitized value D digitally represents the analog level of the DC bus voltage during the given cycle of TWF 230 corresponding to intervals T1 and T2, although the intervals may straddle adjacent cycles. Digitized value D may be represented as a multiple bit word, for example. Converter 226 may compute D as a mathematical function of interval ratio R, or use a lookup table that stores precomputed values of D for interval ratio R, as described further below. The process repeats for successive periods or cycles i, i+1, i+2, i+3, and so on, of TWF 230 such that $R(i) \rightarrow D(i)$, $R(i+1) \rightarrow D(i+1)$, $R(i+2) \rightarrow D(i+2)$, $R(i+3) \rightarrow D(i+3)$, and so on.

In summary, HVID 103 is coupled to both the high-voltage analog domain in which power supply 102 operates and the low-voltage digital domain in which PSC 104 operates, but electrically isolates the two domains from each other. In the example, analog comparator 222, TWG 223, and isolation coupler 224 are exposed to the high voltages of power supply 102, while isolation coupler 224 ensures that PSC 104 (including converter 226) is isolated from the high voltages and is thus exposed only to the low voltage of the PSC.

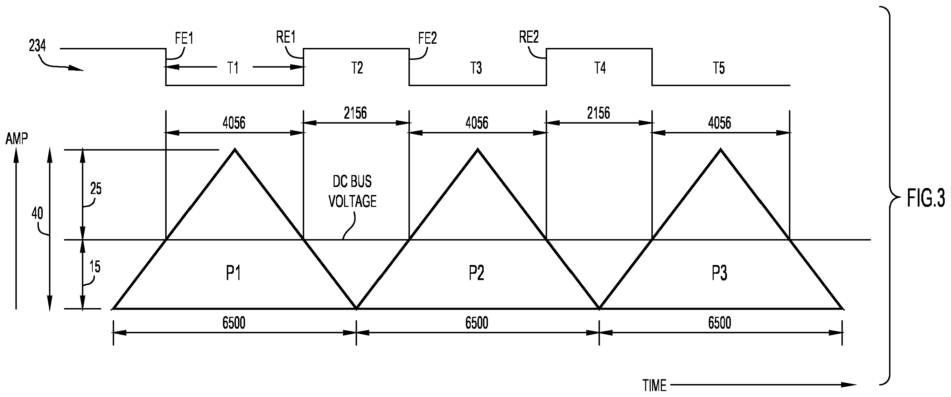

FIGs. 3-5 described below show example waveforms of HVID 103 useful for describing operations performed by the HVDI to convert the DC bus voltage to a digitized value D in three difference scenarios. The waveforms of FIGs. 3-5 are not necessarily drawn to scale.

FIG. 3 shows example waveforms for the DC bus voltage and isolated binary waveform 234 across three cycles P1, P2, and P3 of TWF 230 that have equal periods, while the DC bus voltage is held at a constant level. TWF 230 has an example maximum amplitude $A_m = 40$ units, which corresponds to a range over which the DC bus voltage may vary. In the example, the level of the DC bus voltage has a true value of 15 out of 40 (relative to the maximum amplitude).

Analog comparator 222 compares the amplitude of TWF 230 against the constant level of the DC bus voltage, to produce isolated binary waveform 234 with a level L1 (e.g., 0) or L2 (e.g., 1) depending on whether the amplitude of the TWF exceeds or does not exceed the level of the DC bus voltage, respectively. In the example of FIG. 3, isolated binary waveform 234 includes intervals T1, T3, and T5 at level L1 (e.g., 0) while the amplitude of TWF 230 exceeds the DC bus voltage, and intervening intervals T2 and T4 at level L2 (e.g., 1) while the amplitude does not exceed the DC bus voltage.

Converter 226 receives isolated binary waveform 234 and performs the following operations based on the isolated binary waveform. First, converter 226 translates the intervals conveyed by isolated binary waveform 234 to integer counts. For example, converter 226 translates intervals T1, T2, T3, T4, and T5 to counts 4056, 2156, 4056, 2156, and 4056, respectively. Intervals T1, T3, and T5 are equal (i.e., uniform) and intervals T2 and T4 are equal because the periods of cycles P1, P2, and P3 are equal (e.g., each has a count of 6500) and the DC bus voltage is constant.

Second, converter 226 computes the following interval ratios R(1), R(2), R(3), and R4:

a. Counting from falling edge (FE) FE1, $R(1) = T2/(T1 + T2) = 2156/(4056 + 2156) = 0.347$.
b. Counting from rising edge (RE) RE1, $R(2) = T2/(T2 + T3) = 2156/(2156 + 4056) = 0.347$.
c. Counting from FE2, $R(3) = T4/(T3 + T4) = 2156/(4056 + 2156) = 0.347$.
d. Counting from RE2, $R(4) = T4/(T4 + T5) = 2156/(2156 + 4056) = 0.347$.

As shown above, to compute each interval ratio R, converter 226 combines or totals (i.e., adds) the first and second intervals into a total interval, and then divides one of the first or second intervals by the total interval to produce the interval ratio.

Third, given that the interval ratios are all the same, converter 226 selects one interval ratio R. In the example, interval ratio R = 0.347.

Fourth, converter 226 converts interval ratio R to digital value D by matching interval ratio R to an amplitude ratio $D/A_{max}$, which leads to the following equivalency:

$$D = R \cdot A_{max}.$$

In the example, $A_{max} = 40$ units and R = 0.347, so digital value D = 0.347 • 40 ~ 14 units, which is close to the true value of 15 units.

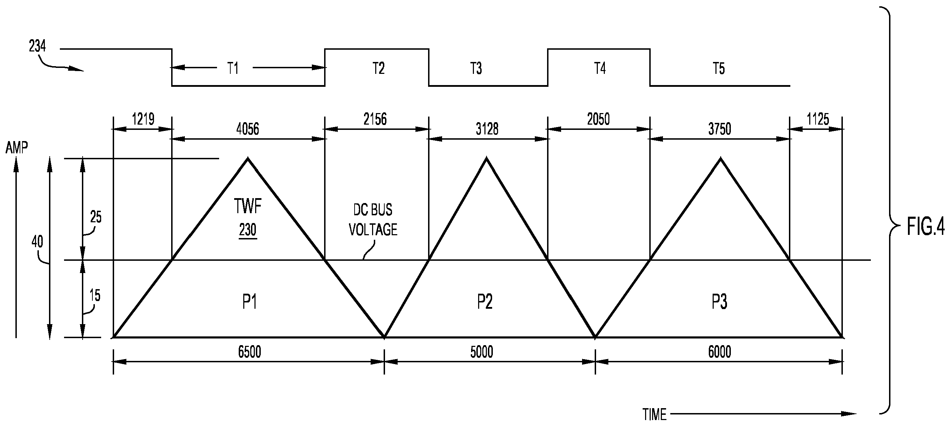

In the example of FIG. 3, the periods of cycles P1, P2, and P3 are equal. In practice, however, the periods may differ due to imperfections of circuit components used to implement TWG 223. Such non-uniform periods result in non-uniform intervals and non-uniform interval ratios across the cycles. To compensate, converter 226 filters the interval ratios to produce a filtered interval ratio, and translates the filtered interval ratio to a digitized value. Converter 226 may filter the interval ratios using a finite impulse response (FIR) filter, an infinite impulse response (IIR) filter, or a simple averaging filter, for example. In the example described below in connection with FIG. 4, converter 226 averages the interval ratios.

FIG. 4 is similar to FIG. 3, except that the cycles P1, P2, and P3 have different periods. Thus, FIG. 4 shows the DC bus voltage held at a constant level as in FIG. 3, while cycles P1, P2, and P3 have different periods. In the example, cycles P1, P2, and P3 have respective periods 6500, 5000, and 6000 in terms of counts. In FIG. 4, intervals T1, T3, and T5 differ from one another and intervening intervals T2 and T4 also differ from one another because the periods of the cycles differ.

As described above, converter 226 computes the following interval ratios R(1) - R4:

> a. Counting from FE1, R(1) = 2156/(4056 + 2156) = 0.347.
> b. Counting from RE1, R(2) = 2156/(2156 + 3128) = 0.408.
> c. Counting from FE2, R(3) = 2050/(3128 + 2050) = 0.396.
> d. Counting from RE2, R(4) = 2050/(2050 + 3750) = 0.347.

Given that interval ratios R(1)-R(4) differ, converter 226 averages all the interval ratios to produce an average interval ratio. In the example, the average interval ratio = 0.376. Converter 226 converts the average interval ratio to digital value D using the relationship digital value $D = R \cdot A_{max}$, where R is the average interval ratio. In the example, digital value D = 0.376 $\cdot$ 40 ~ 15 units.

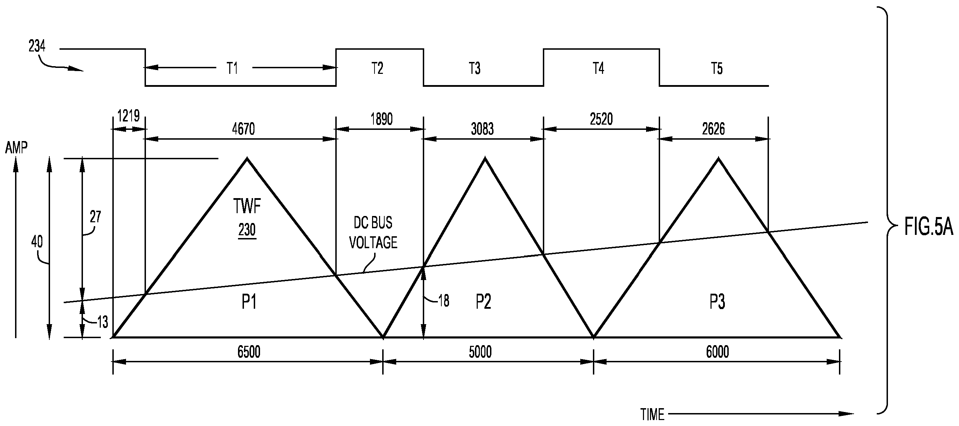

FIG. 5A shows example waveforms similar to those of FIG. 4, except for the differences described below. In FIG. 5A, the DC bus voltage increases linearly across cycles P1, P2, and P3, which have different periods. In FIG. 5A, intervals T1, T3, and T5 differ from one another and intervening intervals T2 and T4 also differ from one another because (i) the periods of cycles P1, P2, and P3 differ, and (ii) the DC bus voltage rises across the cycles.

As described above, converter 226 computes the following interval ratios R(1) - R4:

> a. Counting from FE1, R(1) = 1890/(4670 + 1890) = 0.288.
> b. Counting from RE1, R(2) = 1890/(1890 + 3083) = 0.380.
> c. Counting from FE2, R(3) = 2520/(3083 + 2520) = 0.450.
> d. Counting from RE2, R(4) = 2520/(2520 + 2626) = 0.490.

Given that interval ratios R(1)-R4) differ, converter 226:

> a. Averages the first two intervals to produce a first average interval (0.288 + 0.388)/2 = 0.334, which translates to D ~ 13 units, shown at the start of cycle P1.
> b. Averages the second two intervals to produce a second average interval (0.450 + 0.0.490)/2 = 0.464, which translates to D ~ 18 units, shown at the start of cycle P2.

Converter 226 may convert an interval ratio to a digitized value using a table of predetermined mappings of interval ratios to corresponding digitized values. The table may be constructed a priori. To construct a mapping or entry for the table, analog comparator 222 compares TWF 230 against a known voltage. Converter 226 computes an interval ratio R for the known voltage, and computes a digitized value D for the interval ratio by matching the interval ratio to the ratio D/maximum amplitude $A_m$. Converter 226 stores in the table a mapping of digitized value D to interval ratio R. The known voltage is stepped incrementally, and the process repeats to generate a next mapping of the table, and so on. Once the table is constructed, converter 226 may lookup a digitized value D using an interval ratio R as an index.

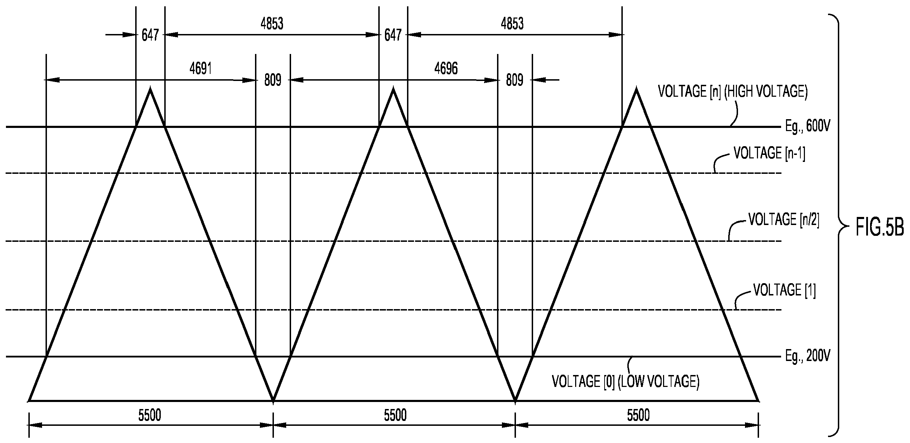

An example calibration scheme for HVID 103 is now described. Calibration of HVID 103 can improve the accuracy with which the HVID digitizes a voltage, post calibration. FIG. 5B shows an example triangle waveform used to calibrate HVID 103. The triangle waveform includes successive cycles of equal period. Calibration may be performed over a number of levels n (also referred to as "points") of voltage u of the triangle waveform. The following analysis assumes n $\geq$ 2, and that a slope du/dt of the triangle waveform is well defined. The example of FIG. 5B includes the following levels: voltage (0) (low-level); voltage (1); voltage (n/2); voltage (n-1); voltage (n) (high-level).

The calibration solves the following linear equation:

u = k $\cdot$ time_fraction + m, where time_fraction is an interval ratio (similar to those descried above) and m is a minimum voltage that can be seen in theory.

For n = 2, the solution calculates the time_fraction for each point, in this case, only the high and low voltage points:

First time_fraction 809/5500 = 0.147 (e.g., at 200V).

Second time_fraction 4853/55055000 = 0.882 (e.g., at 600V).

Using the time_fraction values above, solve for k:

$$k = (600\text{-}200) / (0.882 - 0.147) = 544.$$

Now solve for minimum voltage m:

$$m = 200 - 544 \cdot 0.147 = 120.$$

This leads to u = 544 • time_fraction + 120, which may be used as an analytical solution for digitizing values of a voltage against levels u of the triangle waveform.

On the other hand, if du/dt is not well defined, many points n >> 2 may be used to compensate for all static errors. In this case, each time_fraction bracket is calculated and verified to generate continuous values. In addition, jitter and non-static errors may be handled by filtering the results.

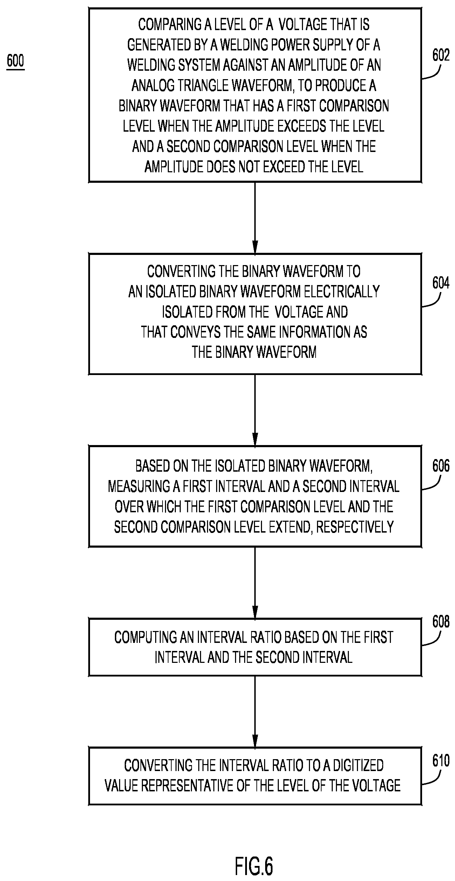

FIG. 6 is a flowchart of example operations performed by HVID 103 in a welding system (e.g., welding system 100) that includes a power supply (e.g., power supply 102) that generates a high-level power supply voltage from a high-level input voltage, and derives weld power for a welding process from the high-level power supply voltage. The welding system includes a digital controller (e.g., PSC 104/converter 226) to control the power supply. The high-level input voltage and the high-level power supply voltage may each vary over a wide range, and may each be an AC voltage or a DC voltage. The digital controller may be powered by a low voltage that is less than each of the high-level input voltage and the high-level power supply voltage.

At 602, an analog comparator compares a level of a high-level voltage (e.g., either the high-level input voltage or the high-level power supply voltage) against a cyclically rising and falling amplitude of an analog triangle waveform, to produce a binary waveform that has a first comparison level (also referred to simply as a "first level") when the amplitude exceeds the level and a second comparison level (also referred to simply as a "second level") when the amplitude does not exceed the level. The comparator compares the level across at least one cycle of the analog triangle waveform.

At 604, an isolation coupler coupled between the analog comparator and the digital controller converts the binary waveform to an isolated binary waveform that is electrically isolated from the high-level voltage and that conveys the same timing and level information as the binary waveform. This operation is optional.

The digital processor performs the following digital processing operations on the isolated binary waveform (or the binary waveform when the optical isolator is absent).

At 606, the digital controller measures a first (time) interval and a second (time) interval over which the first comparison level and the second comparison level extend, respectively.

At 608 the digital controller computes an interval ratio based on the first interval and the second interval. For example, the digital controller combines the first and second intervals into a total interval, and divides one of the first and second intervals by the total interval to produce the interval ratio.

At 610, the digital controller converts the interval ratio to a digitized value representative of the level of the high-level voltage. The digital controller may convert the interval ratio to the digitized value either based on predetermined mappings of interval ratios to digitized values, or analytically, by computing the digitized value based on the interval ratio.

The comparing, measuring, computing, and converting operations of method 600 may repeat over multiple cycles of the analog triangle waveform to produce corresponding ones of multiple interval ratios. In that case, the digital controller may filter the multiple interval ratios to produce a filtered interval ratio, and convert the filtered interval ratio to the digitized value.

As mentioned above, the digital controller also generates PWM waveforms 210 based on the digitized values of the high-level voltage.

While digitizing of a "high-level voltage" is described (e.g., high relative to the low-level voltage that powers the digital controller, and/or sufficiently high to fall under a safety regulation or standard), techniques described herein may be applied more generally to digitize any voltage, whether high or low.

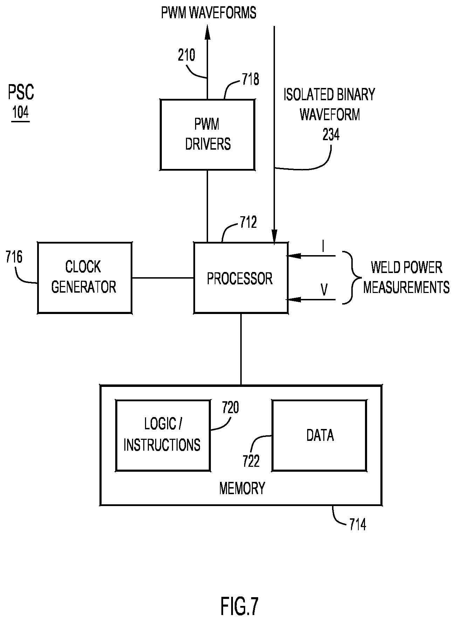

With reference to FIG. 7, there is a block diagram of PSC 104 (also referred to as a "digital controller") according to an embodiment. PSC 104 includes a processor 712 (e.g., a microcontroller) (which may be implemented in hardware, software, or a combination thereof), a memory 714, a clock generator 716, and PWM drivers 718 coupled with each other. PSC 104 receives sensed voltage and current (i.e., voltage and current measurements), isolated binary waveform 234 from power supply 102, and weld power settings, and generates PWM waveforms 210 to control the current and voltage waveforms produced by power supply 102 responsive to the PWM waveforms. Memory 714 stores non-transitory computer readable program instructions/logic instructions 720 that, when executed by processor 712, cause the controller to perform the operations described herein. Memory 714 also stores data 722 used and produced by processor 712. Clock generator 716 generates clocks and timing signals used to drive other components of PSC 104. In embodiments, components of PSC 104 may include electronic circuitry such as, for example, programmable logic circuitry, field-programmable gate arrays (FPGA), or programmable logic arrays (PLA) to execute the computer readable program instructions (e.g., to implement converter 226), which may include microcode, firmware, and so on.

As used herein, the term "connected to" (and similarly "coupled to"), unless specified otherwise, covers an arrangement in which components or terminals/nodes are directly connected to each other, and an arrangement in which the components or terminals/nodes are indirectly connected to each other through one or more intermediate components.

In some aspects, the techniques described herein relate to an apparatus in a welding or cutting system including: an analog comparator to perform comparing a level of a voltage that is generated by a welding power supply of the welding or cutting system against an amplitude of an analog triangle waveform, to produce a binary waveform that has a first comparison level when the amplitude exceeds the level and a second comparison level when the amplitude does not exceed the level; and a digital controller configured to perform: measuring a first interval and a second interval over which the first comparison level and the second comparison level extend, respectively; computing an interval ratio based on the first interval and the second interval; and converting the interval ratio to a digitized value representative of the level of the voltage.

In some aspects, the techniques described herein relate to an apparatus, wherein the digital controller is configured to perform computing the interval ratio by: combining the first interval and the second interval into a total interval; and computing the interval ratio as a ratio of the first interval or the second interval to the total interval.

In some aspects, the techniques described herein relate to an apparatus, wherein: the analog triangle waveform has a known shape that includes rising and falling edges of known slopes and a known maximum amplitude.

In some aspects, the techniques described herein relate to an apparatus, wherein: the analog comparator is configured to perform comparing by comparing the level against the amplitude across at least one cycle of the analog triangle waveform.

In some aspects, the techniques described herein relate to an apparatus, further including: repeating comparing, measuring, computing, and converting for multiple cycles of the analog triangle waveform to produce corresponding ones of multiple interval ratios; and filtering the multiple interval ratios to produce a filtered interval ratio, wherein converting includes converting the filtered interval ratio to the digitized value.

In some aspects, the techniques described herein relate to an apparatus, further including: an electrical isolator coupled between the analog comparator and the digital controller to electrically isolate the digital controller from the voltage.

In some aspects, the techniques described herein relate to an apparatus, wherein: the voltage is a high voltage that is variable and from which weld power for a welding operation is derived; and the digital controller is powered by a low voltage that is less than the high voltage.

In some aspects, the techniques described herein relate to an apparatus, wherein: the electrical isolator is configured to perform converting the binary waveform to an isolated binary waveform electrically isolated from the voltage and that conveys the first comparison level and the second comparison level over the first interval and the second interval, wherein the digital controller is configured to perform measuring and converting based on the isolated binary waveform.

In some aspects, the techniques described herein relate to an apparatus, wherein the electrical isolator includes an optical isolator, a capacitive isolator, or a transformer.

In some aspects, the techniques described herein relate to an apparatus, wherein the digital controller is configured perform: converting the interval ratio to the digitized value based on predetermined mappings of interval ratios to digitized values.

In some aspects, the techniques described herein relate to an apparatus, wherein the digital controller is configured perform: converting the interval ratio to the digitized value by computing the digitized value based on the interval ratio.

In some aspects, the techniques described herein relate to a method performed in a welding system including: performing an analog comparison of a level of a voltage that is generated by a welding power supply of the welding system against an amplitude of an analog triangle waveform, to produce a binary waveform that has a first comparison level when the amplitude exceeds the level and a second comparison level when the amplitude does not exceed the amplitude; and performing digital processing that includes: measuring a first interval and a second interval over which the first comparison level and the second comparison level extend, respectively; computing an interval ratio based on the first interval and the second interval; and converting the interval ratio to a digitized value representative of the level of the voltage.

In some aspects, the techniques described herein relate to a method, wherein computing the interval ratio includes: combining the first interval and the second interval into a total interval; and computing the interval ratio as a ratio of the first interval or the second interval to the total interval.

In some aspects, the techniques described herein relate to a method, wherein: the analog triangle waveform has a known shape that includes rising and falling edges of known slopes and a known maximum amplitude.

In some aspects, the techniques described herein relate to a method, wherein: performing the analog comparison includes comparing the level against the amplitude across at least one cycle of the analog triangle waveform.

In some aspects, the techniques described herein relate to a method, further including: repeating comparing, measuring, computing, and converting for multiple cycles of the analog triangle waveform to produce corresponding ones of multiple interval ratios; and filtering the multiple interval ratios to produce a filtered interval ratio, wherein converting includes converting the filtered interval ratio to the digitized value.

In some aspects, the techniques described herein relate to a method, further including: electrically isolating a digital controller that performs the digital processing from the voltage.

In some aspects, the techniques described herein relate to a method, wherein: the voltage is a high voltage from which weld power for a welding operation is derived; and the digital controller is powered by a low voltage that is less than the high voltage.

In some aspects, the techniques described herein relate to a method, further including: converting the binary waveform to an isolated binary waveform electrically isolated from the voltage and that conveys the first interval and the second interval; and performing measuring and converting based on the isolated binary waveform.

In some aspects, the techniques described herein relate to a method, wherein: converting the interval ratio to the digitized value either based on predetermined mappings of interval ratios to digitized values or by computing the digitized value based on the interval ratio.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

**Claims**

1. An apparatus in a welding or cutting system comprising:

   an analog comparator to perform comparing a level of a voltage that is generated by a welding power supply of the welding or cutting system against an amplitude of an analog triangle waveform, to produce a binary waveform that has a first comparison level when the amplitude exceeds the level and a second comparison level when the amplitude does not exceed the level; and
   a digital controller configured to perform:

      measuring a first interval and a second interval over which the first comparison level and the second comparison level extend, respectively;
      computing an interval ratio based on the first interval and the second interval; and
      converting the interval ratio to a digitized value representative of the level of the voltage.

2. The apparatus of claim 1, wherein the digital controller is configured to perform computing the interval ratio by:

   combining the first interval and the second interval into a total interval; and
   computing the interval ratio as a ratio of the first interval or the second interval to the total interval.

3. The apparatus of claim 1 or 2, wherein:
   the analog triangle waveform has a known shape that includes rising and falling edges of known slopes and a known maximum amplitude.

4. The apparatus of any preceding claim, wherein:
   the analog comparator is configured to perform comparing by comparing the level against the amplitude across at least one cycle of the analog triangle waveform, in which case optionally further comprising:

      repeating comparing, measuring, computing, and converting for multiple cycles of the analog triangle waveform to produce corresponding ones of multiple interval ratios; and
      filtering the multiple interval ratios to produce a filtered interval ratio,
      wherein converting includes converting the filtered interval ratio to the digitized value.

5. The apparatus of any preceding claim, further comprising:

an electrical isolator coupled between the analog comparator and the digital controller to electrically isolate the digital controller from the voltage, in which case optionally any one or more of:

a) wherein: the voltage is a high voltage that is variable and from which weld power for a welding operation is derived; and the digital controller is powered by a low voltage that is less than the high voltage; or
b) wherein: the electrical isolator is configured to perform converting the binary waveform to an isolated binary waveform electrically isolated from the voltage and that conveys the first comparison level and the second comparison level over the first interval and the second interval, wherein the digital controller is configured to perform measuring and converting based on the isolated binary waveform; or
c) wherein the electrical isolator includes an optical isolator, a capacitive isolator, or a transformer.

6. The apparatus of any preceding claim, wherein the digital controller is configured to perform:
converting the interval ratio to the digitized value based on predetermined mappings of interval ratios to digitized values.

7. The apparatus of any one of claims 1 to 5, wherein the digital controller is configured to perform:
converting the interval ratio to the digitized value by computing the digitized value based on the interval ratio.

8. A method performed in a welding system comprising:

performing an analog comparison of a level of a voltage that is generated by a welding power supply of the welding system against an amplitude of an analog triangle waveform, to produce a binary waveform that has a first comparison level when the amplitude exceeds the level and a second comparison level when the amplitude does not exceed the amplitude; and
performing digital processing that includes:

measuring a first interval and a second interval over which the first comparison level and the second comparison level extend, respectively;
computing an interval ratio based on the first interval and the second interval; and
converting the interval ratio to a digitized value representative of the level of the voltage.

9. The method of claim 8, wherein computing the interval ratio includes:

combining the first interval and the second interval into a total interval; and
computing the interval ratio as a ratio of the first interval or the second interval to the total interval.

10. The method of claim 8 or 9, wherein:
the analog triangle waveform has a known shape that includes rising and falling edges of known slopes and a known maximum amplitude.

11. The method of any one of claims 8 to 10, wherein:
performing the analog comparison includes comparing the level against the amplitude across at least one cycle of the analog triangle waveform, in which case optionally further comprising:

repeating comparing, measuring, computing, and converting for multiple cycles of the analog triangle waveform to produce corresponding ones of multiple interval ratios; and
filtering the multiple interval ratios to produce a filtered interval ratio,
wherein converting includes converting the filtered interval ratio to the digitized value.

12. The method of any one of claims 8 to 11, further comprising:
electrically isolating a digital controller that performs the digital processing from the voltage.

13. The method of claim 12, wherein:

the voltage is a high voltage from which weld power for a welding operation is derived; and
the digital controller is powered by a low voltage that is less than the high voltage.

14. The method of any one of claims 8 to 13, further comprising:

converting the binary waveform to an isolated binary waveform electrically isolated from the voltage and that conveys the first interval and the second interval; and performing measuring and converting based on the isolated binary waveform.

15. The method of any one of claims 8 to 14, wherein:
converting the interval ratio to the digitized value either based on predetermined mappings of interval ratios to digitized values or by computing the digitized value based on the interval ratio.

FIG.1

FIG.2

EP 4 674 553 A1

FIG.3

FIG.4

EP 4 674 553 A1

FIG.5A

FIG.5B

647 4853 647 4853

4691 809 4696 809

VOLTAGE [n] (HIGH VOLTAGE)

Eg., 600V

VOLTAGE [n-1]

VOLTAGE [n/2]

VOLTAGE [1]

Eg., 200V

VOLTAGE [0] (LOW VOLTAGE)

5500 5500 5500

EP 4 674 553 A1

17

600

COMPARING A LEVEL OF A VOLTAGE THAT IS
GENERATED BY A WELDING POWER SUPPLY OF A
WELDING SYSTEM AGAINST AN AMPLITUDE OF AN
ANALOG TRIANGLE WAVEFORM, TO PRODUCE A
BINARY WAVEFORM THAT HAS A FIRST COMPARISON
LEVEL WHEN THE AMPLITUDE EXCEEDS THE LEVEL
AND A SECOND COMPARISON LEVEL WHEN THE
AMPLITUDE DOES NOT EXCEED THE LEVEL

602

CONVERTING THE BINARY WAVEFORM TO
AN ISOLATED BINARY WAVEFORM ELECTRICALLY
ISOLATED FROM THE VOLTAGE AND
THAT CONVEYS THE SAME INFORMATION AS
THE BINARY WAVEFORM

604

BASED ON THE ISOLATED BINARY WAVEFORM,
MEASURING A FIRST INTERVAL AND A SECOND INTERVAL
OVER WHICH THE FIRST COMPARISON LEVEL AND THE
SECOND COMPARISON LEVEL EXTEND, RESPECTIVELY

606

COMPUTING AN INTERVAL RATIO BASED ON THE FIRST
INTERVAL AND THE SECOND INTERVAL

608

CONVERTING THE INTERVAL RATIO TO A DIGITIZED
VALUE REPRESENTATIVE OF THE LEVEL OF THE VOLTAGE

610

FIG.6

PWM WAVEFORMS

210

718

PSC
104

ISOLATED BINARY
WAVEFORM
234

PWM
DRIVERS

712

716

CLOCK
GENERATOR

PROCESSOR

I

V

WELD POWER
MEASUREMENTS

720

LOGIC /
INSTRUCTIONS

DATA

722

MEMORY

714

FIG.7

# EP 4 674 553 A1

## EUROPEAN SEARCH REPORT

**Application Number**

EP 25 18 6061

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/408899 A1 (DAI XUNJIANG [CN] ET AL) 30 December 2021 (2021-12-30) * paragraph [0034] - paragraph [0071]; figures 1,2,3,4 * ----- | 1-15 | INV. B23K9/095 B23K9/10 G01R19/00 H02M1/00 |
|  |  |  | TECHNICAL FIELDS SEARCHED (IPC) |
|  |  |  | B23K G01R H02M |

The present search report has been drawn up for all claims

| Place of search | Date of completion of the search | Examiner |
|---|---|---|
| Munich | 14 November 2025 | De Backer, Tom |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 674 553 A1**

## ANNEX TO THE EUROPEAN SEARCH REPORT
## ON EUROPEAN PATENT APPLICATION NO.

EP 25 18 6061

14-11-2025

| Patent document cited in search report | Publication date | Patent family member(s) | | Publication date |
|---|---|---|---|---|
| US 2021408899 A1 | 30-12-2021 | CN | 114503414 A | 13-05-2022 |
| | | EP | 4111581 A1 | 04-01-2023 |
| | | JP | 7471402 B2 | 19-04-2024 |
| | | JP | 2023505003 A | 08-02-2023 |
| | | PH | 12022551274 A1 | 20-11-2023 |
| | | US | 2021408899 A1 | 30-12-2021 |
| | | US | 2022286044 A1 | 08-09-2022 |
| | | WO | 2021168831 A1 | 02-09-2021 |